# FASCICULE DE BREVET EUROPEEN

(11) **EP 2 729 654 B1**
(45) Date de publication et mention de la délivrance du brevet: **16.08.2017**
(21) Numéro de dépôt: 12711667.1
(22) Date de dépôt: 03.04.2012
(51) Int. Cl.: E21B 17/00, B65D 59/06, F16L 57/00

(54) **ENSEMBLE D'EXTRACTION COMPRENANT UN MODULE D'INFORMATION**
EXTRAKTIONSANORDNUNG MIT EINEM INFORMATIONSMODUL
EXTRACTION ASSEMBLY INCLUDING AN INFORMATION MODULE

(30) Priorité: 08.07.2011 FR 1156234; 18.11.2011 FR 1160527
(43) Date de publication de la demande: 14.05.2014
(73) Titulaire: Premium Protector, 31000 Toulouse (FR)
(72) Inventeur: DROUIN, Alexis, F-31000 Toulouse (FR); CHARRUE, Thomas, F-41100 Vendôme (FR)
(74) Mandataire: Regimbeau
(86) Numéro de dépôt international: PCT/EP2012/056111
(87) Numéro de publication internationale: WO 2013/007404

(56) Documents cités:
- JP-A- 2008 070 922
- JP-A- 2008 250 714
- US-A- 5 303 743
- US-A1- 2009 188 675
- US-B1- 7 652 576
- US-B2- 7 606 682

## Description

### DOMAINE TECHNIQUE GENERAL

La présente invention concerne le domaine des tubes d'extraction de pétrole et gaz.

### ETAT DE L'ART

Les tubes d'extraction de pétrole et gaz sont utilisés pour la réalisation de forages des puits et d'extraction, afin d'atteindre des profondeurs importantes.

Ces tubes présentent à chacune de leurs extrémités des filetages permettant de les relier entre eux soit directement, soit au moyen d'éléments intermédiaires.

Les extrémités filetées des tubes sont qualifiées d'extrémités mâles, tandis que les extrémités taraudées des tubes sont qualifiées d'extrémités femelles. Dans l'ensemble de la présente demande de brevet, on parlera de manière générale d'extrémités filetées d'un tube d'extraction, qui désignent indifféremment les extrémités filetées ou taraudées des tubes d'extraction.

Conformément à la pratique de l'Homme de l'Art, un protecteur venant s'adapter sur une extrémité mâle d'un tube est qualifié de protecteur mâle (ou Pin), et un protecteur venant s'adapter sur une extrémité femelle d'un tube est qualifié de protecteur femelle (ou Box).

Le document US 7 606 682 B2 décrit un ensemble d'identification monté sur une tige de forage.

Le document JP 2008 250714 A décrit un module RFID monté sur un tube en acier sans soudure.

Le document US 2009/188675 A1 concerne un système pour identifier une tige de forage avec un module RFID.

Le document JP 2008 070922 A concerne l'utilisation d'une antenne pour amplifier l'émission d'un module RFID associé à un tube.

Une autre problématique avec les tubes d'extraction communément utilisés pour les opérations de forage et d'extraction de pétrole et de gaz est leur suivi logistique et la détermination de leurs propriétés ou des informations les concernant.

Les tubes d'extraction sont en effet typiquement conditionnés sous la forme de lots, ce qui rend la manipulation et la réalisation de mesures sur un tube unique complexe entre sa fabrication et son utilisation sur site.

Plusieurs études ont cherché à modifier les tubes d'extraction afin d'y implanter des moyens de marquage ou de traçage. Toutefois, ces études menées depuis 5 à 10 ans n'ont pas abouti dans la mesure où elles aboutissaient systématiquement à une dégradation des propriétés mécaniques du tube, ce qui est à proscrire.

La présente invention vise à proposer une solution à ces problématiques de suivi logistique et d'identification des tubes d'extraction qui n'ait pas d'impact sur les propriétés mécaniques desdits tubes d'extraction ou des équipements qui y sont associés.

### PRESENTATION DE L'INVENTION

A cet effet, l'invention propose un ensemble comprenant
- un tube d'extraction de pétrole muni d'un filetage à ses extrémités, et au moins un module adapté pour contenir une information relative à au moins une propriété d'un tube d'extraction, ledit module étant un support RFID comprenant un identifiant RFID correspondant à ladite propriété du tube d'extraction et relié de manière amovible audit tube d'extraction, et dans lequel ledit module est fixé sur un harnais comprenant une ceinture adaptée pour être fixée autour dudit tube d'extraction et des moyens de positionnement dudit module adaptés pour positionner ledit module de manière amovible à une extrémité libre d'un protecteur de filetage dudit tube d'extraction.

En variante, ledit ensemble présente une ou plusieurs des caractéristiques suivantes, prises indépendamment ou en combinaison :
- ledit ensemble comprend en outre un moyen de localisation géographique ;
- lesdits protecteurs sont formés par injection de polycarbonate ou de polyuréthane thermoplastique ;
- ledit ensemble comprend en outre un capuchon relié à chacun desdits protecteurs, le module étant adapté pour être positionné sur ledit capuchon du protecteur ; il comprend alors typiquement une sangle flexible reliée au tube au moyen d'un collier sécable, le module étant disposé sur ladite sangle, ladite sangle et les protecteurs étant munis de moyens de fixation complémentaires.
Cette demande de brevet concerne également un système comprenant :
- un tube d'extraction présentant une extrémité mâle et une extrémité femelle,
- deux protecteurs de tube d'extraction respectivement mâle et femelle montés sur les extrémités mâle et femelle du tube d'extraction,
- deux supports RFID comprenant un identifiant RFID correspondant à au moins une propriété dudit tube d'extraction, lesdits identifiants RFID étant associés entre eux dans une base de données externe, et étant également associés à des propriétés dudit tube d'extraction sur lequel lesdits protecteurs sont montés ;
- des moyens de communication adaptés pour lire l'identifiant RFID, et l'afficher.

En variante, ledit identifiant RFID correspond à des propriétés du tube d'extraction parmi la liste suivante : longueur utile du tube, diamètre interne ou externe du tube, identifiant unique du tube. Cette demande de brevet concerne en outre un procédé de suivi d'un tube d'extraction, muni d'un protecteur associé à un module adapté pour contenir une information relative audit tube, consistant à :
- lire l'information dudit module,
- traiter ladite information en la comparant avec des informations contenues dans une base de données existante,
- sélectionner une valeur dans ladite base de données correspondant à une requête d'un utilisateur,
- afficher ladite valeur.

En variante, ledit procédé comprend une étape préalable d'association entre au moins un module comprenant un identifiant unique et d'un tube d'extraction, ledit identifiant du module et des informations relatives au protecteur étant compilées dans une base de données.

L'invention concerne un ensemble comprenant
- un tube d'extraction de pétrole muni d'un filetage à ses extrémités, et au moins un module adapté pour contenir une information relative à au moins une propriété d'un tube d'extraction, ledit module étant un support RFID comprenant un identifiant RFID correspondant à ladite propriété du tube d'extraction et relié de manière amovible audit tube d'extraction, et dans lequel ledit module est fixé sur un harnais comprenant une ceinture adaptée pour être fixée autour dudit tube d'extraction et des moyens de positionnement dudit module adaptés pour positionner ledit module de manière amovible à une extrémité libre d'un protecteur de filetage dudit tube d'extraction.
Lesdits moyens de positionnement sont alors typiquement deux bretelles s'étendant à partir de la ceinture, l'une desdites bretelles servant de support audit module, lesdites bretelles présentant chacune des moyens d'accroche complémentaires adaptés pour permettre d'accrocher lesdites bretelles ensemble à l'extrémité libre du protecteur.

Ladite ceinture comprend alors typiquement un revêtement élastomère, par exemple en néoprène ou en néoprène alvéolaire sur sa face interne adaptée à être au contact dudit tube d'extraction.

Selon une autre variante, la liaison amovible entre ledit tube d'extraction et le module comprend un élément de fermeture adapté pour former un témoin de rupture de la liaison entre le module et le tube d'extraction.

Selon encore une autre variante, ledit module est associé à un moyen de localisation géographique.

Selon encore une autre variante lesdits protecteurs sont formés par injection de polycarbonate ou de polyuréthane thermoplastique.

Selon encore une autre variante ledit ensemble comprend en outre un capuchon relié à chacun desdits protecteurs, le module étant adapté pour être positionné sur ledit capuchon du protecteur. Cette demande de brevet concerne également un système comprenant :
- un tube d'extraction présentant une extrémité mâle et une extrémité femelle,
- deux protecteurs de tube d'extraction respectivement mâle et femelle montés sur les extrémités mâle et femelle du tube d'extraction,
- deux supports RFID comprenant un identifiant RFID correspondant à au moins une propriété dudit tube d'extraction, lesdits identifiants RFID étant associés entre eux dans une base de données externe, et étant également associés à des propriétés dudit tube d'extraction sur lequel lesdits protecteurs sont montés ;
- des moyens de communication disposés à proximité d'un puits de forage, adaptés pour lire l'identifiant RFID d'un tube d'extraction destiné à être utilisé dans ledit puits de forage, et à afficher séquentiellement les identifiants RFID des tubes d'extraction utilisés dans ledit puits de forage ainsi qu'une sélection de propriétés desdits tubes d'extraction.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- les figures 1, 2 et 3 présentent deux variantes d'un ensemble comprenant un tube d'extraction, un protecteur de filetage et un module selon un aspect de l'invention ;
- les figures 4 et 5 présentent une autre variante d'un ensemble comprenant un tube d'extraction, un protecteur de filetage et un module selon un aspect de l'invention ;
- la figure 6 présente une représentation schématique d'un procédé selon un second aspect de l'invention ;
- la figure 7 présente une vue schématique d'un système selon un troisième aspect de l'invention.

### DESCRIPTION DETAILLEE

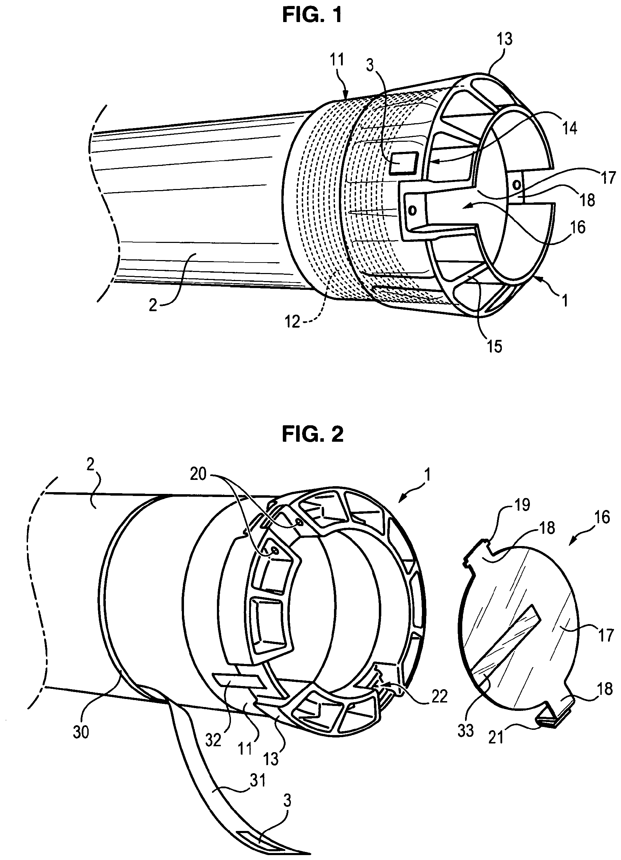

La figure 1 présente un protecteur 1 de filetage d'un tube d'extraction 2 associé à un module 3 permettant de stocker une information.

Le protecteur 1 tel que présenté est avantageusement réalisé par injection de matière plastique et/ou composite (tels que les protecteurs métallo-plastiques), pouvant être transparente ou opaque ; typiquement du polycarbonate ou un polyuréthane thermoplastique.

En variante, le protecteur 1 est réalisé en polypropylène ou en Acrylonitrile Butadiène Styrène, et peut être renforcé par des parties métalliques, métalloplastiques ou composites.

Le protecteur 1 tel que présenté comprend un corps tubulaire 11 muni d'un filetage ou taraudage 12 complémentaire au filetage ou taraudage du tube d'extraction 2, et une couronne externe 13 définissant un élargissement du diamètre externe du protecteur 1 afin d'amortir les éventuels chocs que pourrait subir le tube 2. Plusieurs logements 14 sont définis entre le corps tubulaire 11 et la couronne externe 13, ces logements étant typiquement délimités par des nervures 15 radiales.

Le protecteur 1 tel que représenté est associé à un couvercle 16 disposé à l'extrémité libre du protecteur.

Le couvercle 16 comprend un plateau central 17 et des pattes 18, lesdites pattes étant adaptées pour coopérer avec des moyens de verrouillage tels que des ergots disposés sur le corps du protecteur 1, et ainsi maintenir le couvercle 16 en position sur le protecteur 1.

Le plateau central 17 peut présenter plusieurs formes. Dans le mode de réalisation représenté, il s'agit d'un disque permettant d'obturer totalement l'ouverture se situant à l'extrémité libre du protecteur 1, et ainsi d'en garantir l'étanchéité. En variante, le plateau central 17 peut ne pas obturer totalement l'ouverture à ladite extrémité libre du protecteur 1 ; il peut par exemple s'agit d'une bande selon un diamètre du protecteur 1.

La figure 1 représente une variante dans laquelle le module 3 est fixé sur le protecteur 1. En variante, le module 3 peut être fixé sur le couvercle 16, ou encore sur le tube 2 comme on le verra par la suite sur la figure 2. La fixation du module 3 peut être réalisée au moyen de toute technique adaptée, de manière à assurer son maintien en position sans endommager le module 3, le protecteur 1, le tube 2 ou le couvercle 16.

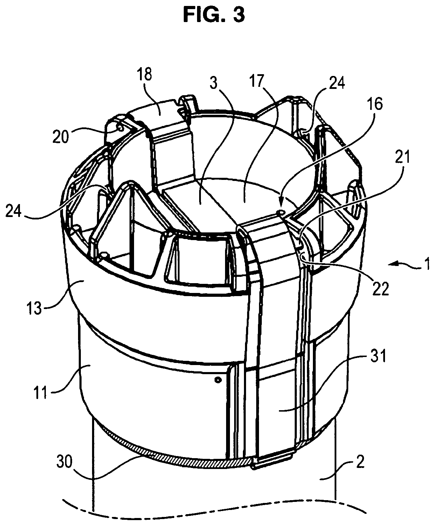

On peut notamment citer les modes de réalisation suivants :
- le protecteur 1 définit un logement 14 interne dans lequel ledit module 3 est disposé ; le ou les logements internes 14 du protecteurs peuvent ensuite être remplis de résine, ce qui permet notamment d'assurer le maintien du module 3 dans ledit logement 14 du protecteur1 ;
- le module 3 est collé ou soudé sur ledit protecteur 1 ou couvercle 16 ;
- le module 3 est fixé sur ledit protecteur 1 ou couvercle 16 au moyen d'attaches (tels que des rivets ou, un ensemble vis-boulon préférentiellement en matière plastique pour limiter toute type de corrosion) ;
- le protecteur 1 ou le couvercle 16 peuvent avoir une excroissance en forme de tige à leur surface. Le module 3 en forme de couronne (ou dont la forme comporte un anneau) peut être positionné autour de l'excroissance. L'extrémité supérieure de l'excroissance est ensuite chauffée pour se déformer, et ainsi obtenir un diamètre supérieur au diamètre du module 3 (ou de l'anneau du module 3) afin de verrouiller le module 3 ;
- le module 3 peut être clipsé au protecteur 1 et couvercle 16, le montage du module 3 se faisant en force ;
- le module 3 peut être relié par un anneau en plastique, élastomère, métal ou en cordage au protecteur 1 ou couvercle 16;
- Le module peut-être cousu notamment sur la sangle 31 qui sera décrite ultérieurement en référence aux figures 2 et 3 ;
- le module 3 peut être soudé sur ledit protecteur 1 ou couvercle 16 (telles que les soudures ultra son, friction ou miroir) ;
- le protecteur 1 ou le couvercle 16 peut être surmoulé autour dudit module 3, ce dernier étant le cas échéant avantageusement disposé dans une enveloppe le protégeant lors du moulage afin d'éviter une dégradation du module.

En variante, le protecteur 1 est réalisé fermé, c'est-à-dire avec une paroi réalisée directement par injection à la place du couvercle 16 présenté sur la figure 1. Selon l'utilisation souhaitée, cette paroi peut être conservée, ou retirée par usinage afin d'obtenir un protecteur 1 « ouvert » comme représenté sur les figures 1 à 3, auquel on associe typiquement un couvercle 16.

Dans le cas où cette paroi est conservée, le module peut être appliqué directement sur cette paroi, ce qui est avantageux en termes de coût de fabrication, et rend le module 3 indissociable du protecteur 1.

Les figures 2 et 3 présentent deux variantes, dans lesquelles le protecteur 1 est muni d'un couvercle 16 monté pivotant au moyen d'une charnière.

La figure 2 présente une vue éclatée d'une première variante, tandis que la figure 3 présente une vue assemblée d'une seconde variante.

Le couvercle 16 est ici composé d'un plateau central 17, muni de deux pattes 18 de part et d'autre de ce plateau central 17, une première de ces pattes étant munie de protubérances 19 adaptées pour coopérer avec des perçages 20 aménagés dans le protecteur 1, ici dans sa couronne externe 13 afin de former une charnière, la seconde de ces pattes formant un moyen de retenue 21 « clipsable » sur des moyens complémentaires 22 du protecteur 1, pouvant être désengagé par l'utilisateur afin de permettre le pivotement du couvercle 16 autour de ladite charnière.

En outre, le tube 2 est également muni d'un collier 30 monté serré autour dudit tube 2, auquel est fixée une sangle 31 présentant une extrémité libre, à proximité de laquelle est fixé le module 3. Ce collier 30 est avantageusement réalisé dans un matériau pouvant être sectionné par un utilisateur, par exemple en plastique, de manière à présenter une résistance suffisante pour garantir la tenue du collier 30 sur le tube 2 en cas de chocs ou sollicitations accidentelles, tout en restant détachable par l'utilisateur.

Tout ou une partie du collier 31 pourra être protégé des impacts par un aménagement du protecteur 1, typiquement une excroissance pour protéger la ou les têtes d'attache du collier 31. Ainsi, avant l'introduction du tube 2 dans un puits de forage, l'utilisateur peut sectionner le collier 30 afin de le détacher du tube 2.

Cette sangle 31 est typiquement une sangle auto-agrippante, par exemple de type velours et crochets par exemple les bandes auto agrippantes commercialisées sous la référence Velcro ™, ou tout autre moyen adapté, par exemple des fixations amovibles en forme de champignons s'enclipsants entre eux (communément commercialisé sous la référence « Dual Lock ™», par des bandes magnétiques complémentaires ou un système comprenant une sangle 31 trapézoïdale s'enclipsant en force dans une forme aménagée du protecteur en forme de queue d'aronde. On peut également utiliser une combinaison des éléments commercialisés sous les références Velcro™ et Dual Lock™, par exemple en associant la partie velours ou la partie crochet d'une bande Velcro™ avec une bande agrippante Dual Lock™. Le protecteur 1 et le couvercle 16 sont alors typiquement munis de moyens de fixation complémentaires, respectivement 32 et 33, permettant à l'utilisateur de fixer la sangle 31 au protecteur 1 et au couvercle 16 lorsqu'ils sont disposés à l'extrémité du tube 2.

La sangle 31 est avantageusement dimensionnée de sorte que, lorsqu'elle est fixée au protecteur 1 et au couvercle 16, le module 3 soit disposé sensiblement au centre du plateau central 17 du couvercle 16.

Dans le mode de réalisation représenté sur la figure 2, le protecteur 1 comprend une fente aménagée dans sa couronne externe 13, afin de permettre le passage de la sangle 31 de manière à ce qu'elle soit protégée par le protecteur 1 des chocs ou sollicitations extérieures. Le protecteur 1 peut également comprendre des nervures, par exemple sur le corps 11 du protecteur 1 afin de protéger la sangle 31.

Dans la variante représentée sur la figure 3, ce passage pour la sangle 31 correspond à la portion de la couronne externe 13 comprenant les moyens complémentaires 22 au moyen de retenue 21 du couvercle 16. Cette variante permet en outre de maintenir le couvercle 16 fermé tant que la sangle 31 est en place.

Dans cette variante, le protecteur 1 comprend en outre des encoches 24 faisant saillie de l'extrémité libre du protecteur 1, ces encoches 24 étant typiquement adaptées pour permettre à un utilisateur d'y insérer un outil pour visser ou dévisser le protecteur 1 du tube 2, et réalisent en outre une protection supplémentaire contre les chocs longitudinaux.

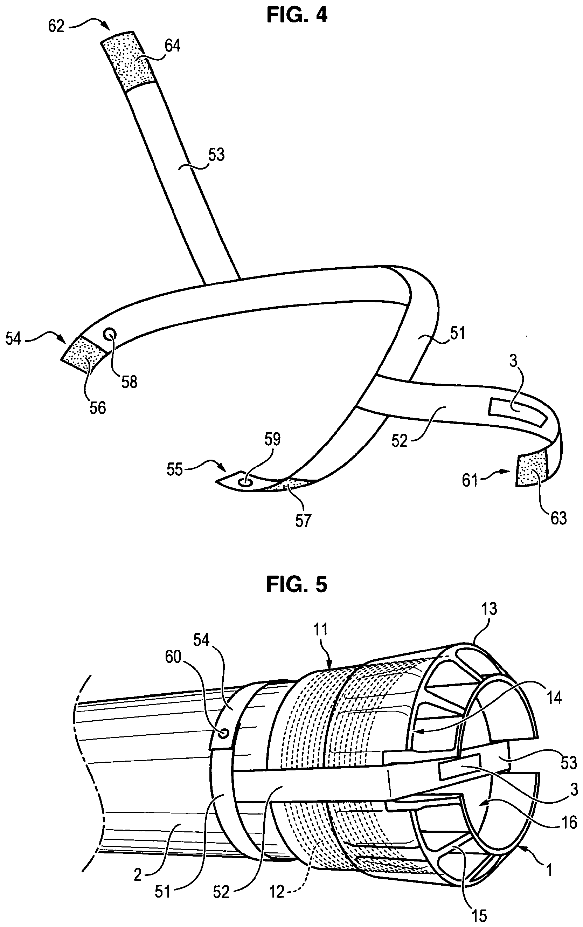

Les figures 4 et 5 présentent un autre mode de réalisation dans lequel la le module 3 est associé à un harnais permettant sa fixation au protecteur 2 et son positionnement sur l'extrémité libre du protecteur 2 sans nécessiter de moyens spécifiques sur le protecteur 1 ou sur le tube 2.

Plus précisément, le harnais 5 comprend une ceinture 51 d'où s'étendent deux bretelles respectivement 52 et 53. Le harnais 5 est typiquement réalisé en Polyester et/ou en Neoprène.

La ceinture 51 présente deux extrémités libres 54 et 55 présentant des moyens d'accroche complémentaires 56 et 57, typiquement des éléments auto-agrippants tels que décrits précédemment. Ces moyens d'accroche complémentaires 56 et 57 sont typiquement disposés sur deux faces opposées de la ceinture 51, de sorte qu'en superposant les deux extrémités libres 54 et 55 de la ceinture 51 lesdits moyens d'accroche complémentaires 56 et 57 puissent s'engager.

Les extrémités libres 54 et 55 comprennent également avantageusement chacun un orifice, respectivement 58 et 59 adaptés pour être alignés lorsque les deux extrémités libres 54 et 55 de la ceinture sont superposées et les moyens d'accroche complémentaires 56 et 57 engagés, afin d'y insérer un élément de fermeture 60 de la ceinture 51 ; typiquement un rivet tel que présenté sur la figure 5.

La ceinture 51 du harnais 5 est dimensionnée de manière à ce que l'élément de fermeture 60 la maintienne serrée sur un protecteur 2 avec un diamètre donné, de sorte que le retrait de la ceinture 51 du protecteur 2 nécessite le retrait de l'élément de fermeture 60.

Les deux bretelles 52 et 53 s'étendent à partir de la ceinture 51, de manière à être diamétralement opposées lorsque la ceinture est fermée autour d'un tube 2. La longueur de la portion de ceinture 51 séparant les deux bretelles 52 et 53 est ainsi avantageusement égale à la moitié de la périphérie externe du tube 2 sur lequel le harnais 5 est destiné à être fixé. Chacune de ces bretelles présente ainsi une extrémité libre, respectivement 61 et 62.

Les deux bretelles 52 et 53 telles que présentées peuvent être définies comme une bretelle support 52 et une bretelle d'attache 53.

La bretelle support 52 comprend le module 3 tel que présenté précédemment, disposé typiquement à proximité de l'extrémité libre 61 de la bretelle support 52.

Les extrémités libres 61 et 62 des bretelles 52 et 53 sont avantageusement munies de moyens d'accroche complémentaires 63 et 64, typiquement des éléments auto-agrippants tels que décrits précédemment. Ces moyens d'accroche complémentaires 63 et 64 sont typiquement disposés chacun sur une face distincte, de sorte qu'en superposant les deux extrémités libres 63 et 64 des bretelles 52 et 53 lesdits moyens d'accroche complémentaires 63 et 64 puissent s'engager. Les bretelles 52 et 53 et le module 3 sont avantageusement dimensionnés et positionnés de sorte que lorsque le harnais est attaché à un tube 2 et que les deux bretelles sont accrochées via leurs moyens d'accroche complémentaires 63 et 64, le module 3 soit positionné à l'extrémité libre du protecteur, typiquement sur son couvercle 16.

En se référant à la figure 5, sur laquelle on présente un tube 2 à l'extrémité duquel est disposé un protecteur 1 tel que décrit précédemment, on entoure le tube 2 au moyen de la ceinture 51 du harnais 5, puis on accroche les deux bretelles 52 et 53 au niveau du protecteur 2, sur son extrémité libre ; le cas échéant sur son couvercle 16. On peut ensuite verrouiller le positionnement du harnais 5 sur le tube 2 à l'aide d'un élément de fermeture 60 tel que décrit précédemment.

Ce mode de réalisation particulier permet ainsi d'équiper d'un module 3 un ensemble tube 2 et protecteur 1 ne comprenant aucun moyen d'accroche dédié, et sans nécessiter que le protecteur 1 soit dans un matériau particulier, ou que les surfaces de fixation du module 3 soient spécialement préparées ou nettoyées pour permettre sa fixation.

De plus, l'élément de fermeture 60 permet de s'assurer que le module 3 reste solidaire du tube 2 choisi ; séparer le module 3 du tube 2 requiert en effet la destruction du harnais 5, du module 3, ou de l'élément de fermeture 60. L'utilisateur peut ainsi clairement identifier un module 3 ayant été séparé du tube 2 sur lequel il était initialement fixé, l'élément de fermeture 60 jouant un rôle de témoin de rupture ou de scellé.

En outre, les bretelles 52 et 53 pouvant avantageusement être assemblées et séparées l'une de l'autre via leurs moyens d'accroche complémentaires 63 et 64, l'utilisateur pourra toujours réaliser les opérations de vérification et de contrôle du tube 2 telles que les opérations de Drift. Il lui suffit en effet de séparer les deux bretelles 52 et 53 qui restent bien attachées au tube 2 via la ceinture 51, de retirer le cas échéant le couvercle 16 du protecteur ou le protecteur 1 entier, de réaliser ses opérations de contrôle, puis de remettre le couvercle 16 ou le protecteur 1 en place, et enfin de re-accroches les deux bretelles 52 et 53 entre elles.

Par ailleurs, l'utilisation d'une ceinture 51 comprenant un revêtement interne élastomère, tel que du néoprène ou du néoprène alvéolaire, permet de réaliser un effet ventouse sur la périphérie du tube 2, et ainsi de renforcer son maintien en position autour du tube 2.

Enfin, en assurant le positionnement du module 3 à l'extrémité libre du protecteur 1, c'est-à-dire à une extrémité du tube 2, on facilite considérablement la lecture des informations contenues par le module 3 par rapport à un module fixé sur la circonférence du tube 2 ou du protecteur 1.

Dans ces modes de réalisation le module 3 est lié au tube 1, ce qui permet d'éviter tout risque de séparation accidentelle entre le module 3 et le tube 2 associé, par exemple lors d'un retrait de protecteurs 1 pour une opération de contrôle ou de nettoyage, sans dégradation du tube 2. De manière plus générale, qu'il s'agisse du mode de réalisation représenté sur la figure 1, sur la figure 2, sur la figure 3, ou sur les figures 4 et 5, le module 3 est lié de manière amovible au tube 2 que ce soit par l'intermédiaire du protecteur 1 ou de son couvercle 16, ou de moyens d'attache tels qu'un collier 30.

Le positionnement du module 3 sur le couvercle 16 présente plusieurs avantages. En effet, le module 3 peut être gêné pour son émission du fait de la nature métallique du tube 2. Ainsi, en positionnant le module 3 sur le couvercle 16 du protecteur 1, on éloigne au maximum le module 3 du tube 2, et on réduit alors les interférences que ce dernier peut provoquer sur les émissions du module.

Dans le cas où le module 3 est disposé sur le couvercle 16 du protecteur 1, ledit couvercle 16 est alors avantageusement relié au corps du protecteur 1 de sorte qu'il ne puisse pas en être dissocié. Une telle liaison peut par exemple être réalisée au moyen d'une chainette, d'un câble, d'une corde ou encore d'une liaison charnière comme dans le mode de réalisation de la figure 2.

Le module 3 est avantageusement disposé de manière à ne pas être exposé à des chocs ou contraintes externes qui seraient susceptibles de l'endommager, par exemple dans des renfoncements ou logements.

Le module 3 est typiquement un module RFID contenant une étiquette RFID, avantageusement de type UHF (ultra-haute fréquence), c'est-à-dire les modules RFID utilisant des fréquences comprises dans la gamme 860 MHz - 960 MHz. Le module 3 peut également être associé à un module de positionnement de type GPS ou un module GPRS, de tels modules étant bien connus de l'état de la technique et permettant de localiser le tube associé au module, ce qui permet par exemple de réaliser un suivi en temps réel de commandes ou de livraisons de tubes, ou encore pour la localisation de stocks.

Un tel module de positionnement de type GPS ou GPRS est typiquement associé à une « botte » de tubes, c'est-à-dire à un lot de tubes reliés entre eux par des élingues et des carcans pour leur conditionnement ou leur transport. Le module de positionnement est avantageusement positionné sur une élingue ou un carcan de la botte de tube afin d'être bien dégagé pour ne pas entraver l'émission du module de positionnement.

On peut ainsi suivre géographiquement un tel lot de son conditionnement jusqu'à son site d'utilisation grâce au module de positionnement, tandis que le suivi individuel des différents tubes sur le site d'utilisation est ensuite réalisé par le module 3 qui est par exemple de type RFID.

En associant ainsi un module de positionnement à une « botte » de tubes, on réduit le nombre de modules de positionnement nécessaire, de tels modules étant plus coûteux que des modules de type RFID.

Le module de positionnement géographique et les différents modules des tubes de la botte de tube concernée sont avantageusement associés, par exemple dans une base de donnée lors de leur conditionnement.

On note que la technologie RFID (en anglais, « *Radio Frequency IDentification* »), sur laquelle se base la technologie NFC (en anglais, « *Near Field Communication* ») est bien connue de l'état de la technique et ne sera pas ici décrite en détail. La technologie RFID emploie des modules appelés communément « marqueurs » pouvant être collés ou incorporés à des objets, comprenant une antenne associée à une puce électronique qui leur permet de recevoir et de répondre à des requêtes radio émises depuis un émetteur-récepteur.

Selon un mode de réalisation particulier, on utilise la technologie connue sous l'appellation « passive UHF » à ultra-hautes fréquences ; c'est-à-dire typiquement de 860 Mhz à 960 Mhz dans laquelle le module 3 ne comprend pas de batterie, ou un module actif à ultra-haute fréquences, muni d'une batterie.

Le module comprend par exemple une information codée sur 512 bits. On peut typiquement utiliser l'encodage suivant :
- un identifiant unique codé sur 30 bits, ce qui permet d'encoder des identifiants uniques pour 2 à 4 millions de tubes par an sur une durée de 50 ans ;
- la longueur du tube : en mètres avec une précision au centimètre près ; pour des longueurs de tubes allant de 0 à 15 m = 1 500 valeurs sur 2 048 ; soit 11 bits ;
- les diamètres du tube : typiquement 10 valeurs de diamètres sur 32 valeurs, soit 5 bits ;
- le type de filetage : 10 types différents de filetage encodés sur 32 valeurs, soit 5 bits ;
- l'épaisseur du tube : 50 valeurs d'épaisseurs encodées sur 64, soit 6 bits ;
- le nom ou un identifiant abrégé du producteur du tube : typiquement encodé sur 6 bits ;
- le nom ou un identifiant abrégé d'un client (destinataire du tube par exemple) : typiquement encodé sur 8 bits ;
soit un total de 71 bits occupés par ces informations.

Les bits restants sur les 512 bits de mémoire du module serviront à stocker les derniers évènements vécus par le tube (lieu, date, lecteur, action), chacun de ces évènements étant typiquement encodé sur une centaine de bits. On peut ainsi typiquement enregistrer sur le module entre 3 et 5 des derniers évènements de la vie du tube.

Selon un mode de réalisation particulier, le protecteur 1 et/ou le tube 2 comprend un second moyen d'identification, typiquement sous la forme d'un numéro de série ou d'un code barre, un tel second moyen n'étant typiquement exploité qu'en cas de défaillance du module 3.

On note que les figures 1, 2, 3, 4 et 5 présentent une unique extrémité d'un tube d'extraction 1 munie d'un protecteur 2. On comprend aisément que l'on retrouve une disposition similaire à l'autre extrémité du tube 2.

Par exemple, dans le cas d'un tube d'extraction 2 comprenant une extrémité mâle et une extrémité femelle, ces deux extrémités sont munies respectivement d'un protecteur mâle et d'un protecteur femelle, chacun de ces protecteurs 1 étant alors avantageusement muni d'un module 3.

L'invention permet ainsi de disposer de moyens permettant l'identification rapide et automatisée des tubes d'extraction, sans avoir d'impact négatif sur les propriétés des tubes d'extraction en eux-mêmes. L'implantation du module 3 qui contient des informations relatives au tube 2 sur le ou les protecteurs 1 ou couvercle(s) 16 du/des protecteur(s) associés au tube 2 permet en effet de n'effectuer aucune modification structurelle sur le tube 2 en lui-même, contrairement aux démarches antérieures de l'Homme du métier qui allait naturellement chercher à implanter un moyen d'identification du tube directement sur le tube.

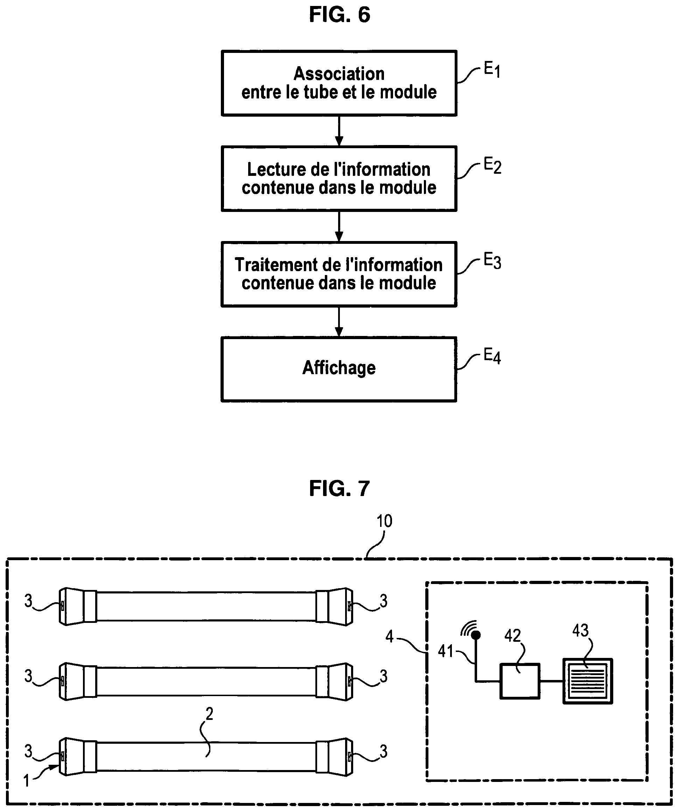

La figure 6 illustre schématiquement un procédé de suivi d'un tube d'extraction associé à un protecteur et à un module tel que défini précédemment.

### Etape E1 d'association entre le tube et le module.

Cette étape E1 se situe typiquement suite à la fabrication du tube, lors du conditionnement de celui-ci.

On associe alors un ou plusieurs modules tels que décrits précédemment, par exemple un module à chacune des extrémités du tube. On distingue deux variantes selon que le module est fixé au tube lui-même ou au protecteur.

Dans le cas où le module est associé au protecteur, ce qui correspond par exemple au mode de réalisation représenté sur la figure 1, des protecteurs de filetage sont associés audit tube, typiquement un protecteur à chacune de ses extrémités, préalablement à son conditionnement en lot et à son transport ou son stockage.

Dans le cas où le module est associé au tube, ce qui correspond par exemple au mode de réalisation représenté sur les figures 2 à 5, on associe un ou plusieurs modules au tube, par exemple en les fixant au moyen de colliers plastiques qui sont serrés sur le corps du tube, à proximité de ses extrémités ou au moyen de harnais tels que présentés précédemment.

Lors de cette association entre le tube d'extraction et le ou les module, on applique au(×) module(s) une ou plusieurs informations relatives au tube.

On peut envisager plusieurs modes de réalisation pour réaliser cette étape E1.

Le tube peut par exemple être repéré par un identifiant unique, typiquement défini par son fabriquant. Le ou les modules se voient alors également appliquer cet identifiant.

En variante, la ou les informations contenues par le module correspondent avantageusement à une ou plusieurs des propriétés suivantes du tube associé :
- la longueur du tube,
- le diamètre intérieur et extérieur du tube,
- le type de filetage ou de taraudage du tube,
- l'épaisseur du tube,
- les propriétés géométriques du filetage du tube.
- l'identification d'un client
- la traçabilité de l'historique du tube (en référençant notamment les différents lieux, dates et actions)
- un type de revêtement présent sur le filetage du tube
- un numéro de commande
- Un numéro de tube unique

En variante, le ou les modules sont déjà munis d'un identifiant unique ; on relie alors l'identifiant du tube ou ses propriétés (par exemple son fabriquant, ses dimensions, et tout autres propriétés permettant de le caractériser) et celui du ou des modules qui lui sont associés dans une base de données. L'utilisation d'identifiants uniques permettra d'identifier de manière univoque les protecteurs au moyen de leur identifiant.

Dans le cas où le module comprend un identifiant unique du tube ou du protecteur, cet identifiant est ensuite associé à une base de données comprenant les identifiants des différents tubes et protecteurs munis de tels modules, ainsi que les informations associées auxdits tubes ou modules.

On peut notamment citer comme informations :
- les propriétés géométriques du tube,
- les rapports de contrôles effectués sur le tube,
- le lot dont provient le tube, ou son lieu de fabrication.
- l'historique des actions concernant le tube et/ou le module.

L'information relative à une propriété du tube d'extraction étant inscrite sur le module lors du conditionnement du tube et donc de la mise en place des protecteurs aux extrémités filetées du tube, on s'assure que les informations contenues dans le module correspondent effectivement au tube sur lequel le module est disposé.

### Etape E2 de lecture de l'information contenue dans le module.

L'information contenue dans le module est lue par des moyens de communication adaptés.

Cette lecture de l'information contenue dans le module peut intervenir dans plusieurs situations, parmi lesquelles on peut citer de manière non limitative :
- les contrôles de stocks ou inventaires,
- le suivi de commandes ou de lots de tubes d'extraction,
- préalablement à l'utilisation des tubes sur un site de forage ou d'extraction, lors du retrait des protecteurs de filetage du tube afin d'identifier et référencer les tubes utilisés sur site.

La lecture de l'information contenue dans le module peut être réalisée sur requête ou de manière automatisée lors du passage du protecteur à proximité d'un lieu donné.

En cas de défaillance du module 3, l'information qu'il contient ne peut alors typiquement pas être lue, ou n'est lue que partiellement. Dans ce cas, si le protecteur 1 et/ou le tube 2 est muni d'un second moyen d'identification tel qu'un numéro de série ou un code barre, l'opérateur peut identifier le tube et/ou le protecteur au moyen de ce second moyen d'identification.

### Etape E3 de traitement de l'information contenue dans le module.

Suite à la lecture de l'information contenue dans le module, cette information est traitée par les moyens de communication, qui sont avantageusement adaptés pour réaliser tout ou partie des opérations suivantes :
- segmenter l'information lue afin d'en extraire uniquement une information spécifique souhaitée par l'utilisateur,
- comparer l'information lue avec des informations stockées dans une base de données.

Dans les modes de réalisation où l'information lue est comparée avec des données stockées dans une base de données, les moyens de communication sont typiquement adaptés pour extraire des données de ladite base correspondant à une requête de l'utilisateur.

Cette étape E3 est typiquement suivie d'une étape d'affichage E4 de l'information souhaitée.

La figure 7 présente un exemple de système 10 adapté pour la mise en oeuvre du procédé tel que défini précédemment.

Le système 10 comprend plusieurs tubes 2, chacun desdits tubes étant muni de protecteurs 1 et de modules 3 tel que présenté précédemment sur les figures 1 à 5, ainsi que des moyens de communication 4 permettant de lire, traiter et afficher l'information contenue dans le module 3.

Les moyens de communication 4 comprennent typiquement une ou plusieurs antennes 41 adaptées pour détecter les modules 3 et lire l'information qu'ils contiennent à une distance définie.

Cette distance et donc la nature de l'antenne 41 utilisée est typiquement choisie selon l'emplacement et la fonction de l'antenne 41.

A titre d'exemple, pour une antenne 41 disposée dans une aire de stockage, on choisira avantageusement une antenne 41 qui soit à même de détecter les modules 3 se trouvant sur toute la superficie de l'aire de stockage.

Pour une antenne 41 disposée dans une zone spécifique telle que la zone de préparation des tubes 2 pour leur descente dans le puits de forage ou dans une zone de stockage dans laquelle est entreposé le prochain tube 2 destiné à être descendu dans le puits de forage, on choisira avantageusement une antenne 41 courte distance afin de s'assurer que seuls les modules 3 des tubes 2 qui sont conduits dans une telle zone sont détectés et lus.

Des antennes 41 courte distance peuvent également être disposées sur des outils servant au dévissage des protecteurs 1, ce qui les amène ainsi à proximité des modules 3 reliés aux tubes, aux protecteurs ou aux couvercles.

On peut également disposer des antennes 41 dans les bacs à protecteurs, dans lesquels sont entreposés les protecteurs 1 suite à l'utilisation du tube sur lequel ils étaient fixés dans le cas du mode de réalisation présenté sur la figure 1, ou dans un conteneur comprenant les différentes sangles, harnais et modules associés suite à leur retrait du tube dans le cas de mode de réalisation présenté sur les figures 2 à 5. Une telle antenne permet par exemple ainsi de confirmer les tubes 2 ayant bien été descendus dans le puits de forage ou étant en passe de l'être.

La détection et la lecture informations contenues par les modules 3 est alors réalisée directement lors du dévissage des protecteurs 1 du tube 2 afin de s'assurer que seuls les modules 3 associés aux tubes 2 étant effectivement utilisés soient identifiés et lus.

Les moyens de communication 4 comprennent typiquement un moyen de traitement 42 tel qu'un processeur adapté pour traiter l'information qui est sur le module, ainsi que des moyens d'affichage 43 permettant à l'utilisateur de visualiser l'information souhaitée.

### Exemples de mise en oeuvre.

Un premier exemple de mise en oeuvre d'un aspect de l'invention concerne les opérations de contrôle des tubes d'extraction.

Un utilisateur peut souhaiter contrôler les propriétés de tubes d'extractions qui sont stockés en lot préalablement à leur utilisation ou à leur acheminement sur un site d'utilisation.

L'utilisateur est alors typiquement muni d'un dispositif portable de lecture des informations contenues dans les modules des différents protecteurs associés aux tubes visés, qui peut typiquement être associé à un appareil tel qu'un ordinateur portable, une tablette ou un PDA.

Les informations lues sur les modules des différents tubes sont ensuite comparées avec des informations entrées dans une base de données qui comprend typiquement les informations suivantes :
- une référence du tube,
- des références des protecteurs associés audit tube,
- des propriétés du tube ; par exemple son diamètre interne, son diamètre externe, sa longueur utile, son poids, son fabriquant, les propriétés des filetages à ses extrémités,
- des rapports concernant le tube ou les protecteurs associés ; par exemple des rapports de contrôles réalisés sur le tube (typiquement les opérations de contrôle de l'intérieur du tube, communément désignées « Drift »),
- des numéros de commandes associés au tube ou au lot de tubes, permettant ainsi de déterminer la destination du tube ou lot de tubes.

L'utilisateur qui souhaite contrôler les propriétés de tubes dans une zone de stockage, ou plus généralement effectuer un inventaire, peut passer à proximité des tubes munis de modules avec un lecteur portable qui relève l'ensemble des identifiants contenus par les modules, puis se connecte à une base de données existante afin d'obtenir les informations correspondant aux tubes identifiés.

En cas de lecture double d'un tube, par exemple en relevant deux fois le même identifiant, ou en relevant deux modules d'un même tube dans le cas où le tube comprend un module disposé à chacune de ses extrémités, ce conflit est géré au niveau de la base de données qui relie ces mesures multiples au même tube.

L'utilisateur peut procéder à des contrôles des tubes d'extraction par exemple des contrôles de leurs dimensions au moyen d'outils de mesure tels qu'un télémètre laser, et ensuite recouper ces mesures avec les informations contenues dans les modules des différents tubes.

Un second exemple de mise en oeuvre d'un aspect de l'invention concerne l'utilisation des tubes sur site, par exemple dans le cas d'un forage.

Les tubes sont acheminés sur le site de forage par lots, puis conduits vers le puits de forage où ils sont assemblés afin d'être mis bout à bout, et descendus dans un puits de forage.

Des moyens de communication tels que des antennes sont alors avantageusement disposés dans une zone de préparation et d'assemblage des tubes préalablement à leur descente dans le puits de forage.

Les moyens de communication détectent alors automatiquement ou suite à une sollicitation de l'utilisateur les protecteurs qui sont conduits dans cette zone de préparation, et identifient donc les tubes qui y sont conduits et seront donc descendus dans le puits de forage.

L'utilisateur peut ainsi réaliser une liste des différents tubes qui ont été descendus dans le puits de forage, par ordre chronologique. Il peut ainsi accéder à différents types d'informations, par exemple identifier le positionnement des tubes dans le puits de forage en reportant les longueurs des différents tubes, connaître la longueur totale de tubes qui ont été descendus dans le puits de forage.

Le tableau 1 ci-dessous illustre un exemple d'une telle mise en oeuvre afin d'obtenir une table directement utilisable par l'utilisateur.

Dans l'exemple illustré, l'utilisateur peut ainsi visualiser les différents tubes ayant été introduits dans le puits de forages et ceux qui sont en passe de l'être, et dispose d'informations concernant leur ordre d'introduction, leurs longueurs individuelles et cumulées, et la profondeur à laquelle ils se trouvent.

Un tel tableau est avantageusement mis à jour en temps réel, au fur et à mesure que les différents moyens de communication détectent les modules dans la zone de préparation avant descente. L'utilisateur peut ensuite par exemple valider les différents tubes au fur et à mesure qu'ils sont effectivement descendus dans le puits. Un tel tableau est avantageusement partagé via des moyens de communication tels qu'Internet, permettant ainsi à toute personne autorisée à consulter l'évolution du puits, avantageusement en temps réel.

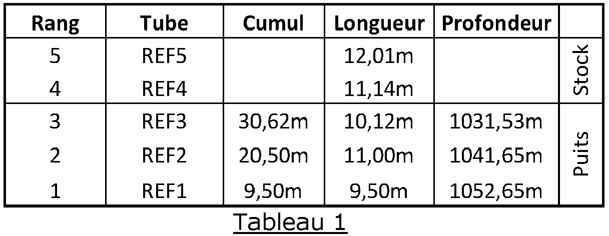

Les informations ainsi affichées reprennent typiquement les données suivantes : numéro du tube, type de filetage, diamètre du tube, longueur du tube, somme des longueurs des tubes descendus dans le puits.

Pour ce type d'applications, on se limite avantageusement à la lecture de l'information contenue dans le module, sans passer par la consultation ou la liaison à une base de données afin que le système ne soit pas affecté en cas de coupure de réseau, ce qui est particulièrement avantageux compte tenu des sites d'utilisation des tubes d'extraction.

L'invention présente de nombreux avantages par rapport aux dispositif et procédés conventionnels.

En premier lieu, l'invention propose de réaliser un suivi et un traçage des tubes d'extraction, ce qui permet d'accéder rapidement et facilement aux propriétés et informations concernant un tube d'extraction. L'invention permet en outre de s'assurer de l'indissociabilité « accidentelle » du tube et du module contenant l'information le concernant, tout en permettant son retrait avant descente dans le puits.

L'utilisateur peut ainsi accéder à ces informations à partir de l'information contenue dans le module. Il n'est ainsi plus nécessaire de réaliser des opérations de mesure sur site, les informations géométriques concernant le tube d'extraction concernées pouvant être retrouvées rapidement grâce à l'information contenue dans le module. Le nombre de manipulations effectuées sur le tube et les protecteurs est donc fortement réduit.

Les opérations de suivi de stock et de commandes sont simplifiées, et peuvent être actualisées en temps réel. Les opérations de comptage sont également simplifiées.

Par ailleurs, en cas de complication ou d'incident lié à l'utilisation d'un tube, l'invention permet une traçabilité des différents contrôles de qualité du tube visé.

Par exemple, si lors du forage d'un puits, on détecte un incident à une profondeur donnée. Les informations concernant les longueurs utiles des différents tubes descendus successivement dans le puits permettent de déterminer quel tube se situe à la profondeur de l'incident. L'utilisateur peut alors accéder aux différentes informations concernant le tube ; par exemple les rapports des différents contrôles réalisés sur les tubes tels que les « drifts ».

## Revendications

1. Ensemble comprenant
- un tube d'extraction (2) de pétrole muni d'un filetage à ses extrémités, et
ledit ensemble comprenant au moins un module (3) adapté pour contenir une information relative à au moins une propriété d'un tube d'extraction (2), ledit module étant un support RFID comprenant un identifiant RFID correspondant à ladite propriété du tube d'extraction (2) et relié de manière amovible audit tube d'extraction (2), et dans lequel ledit module (3) est fixé sur un harnais (5) comprenant une ceinture (51) adapté pour être fixée autour dudit tube d'extraction (2), ledit ensemble étant **caractérisé en ce qu'**il comprend des moyens de positionnement (31, 52, 53) dudit module (3) adaptés pour positionner ledit module (3) de manière amovible à une extrémité libre d'un protecteur (1) de filetage dudit tube d'extraction.

2. Ensemble selon la revendication 1, comprenant en outre deux protecteurs (1) de filetage dudit tube d'extraction (2), chacun desdits protecteurs comprenant un corps tubulaire, un filetage complémentaire audit filetage du tube d'extraction et une extrémité libre.

3. Ensemble selon la revendication 2 dans lequel lesdits moyens de positionnement sont deux bretelles (52, 53) s'étendant à partir de la ceinture (51), l'une desdites bretelles (52) servant de support audit module (3), lesdites bretelles (52, 53) présentant chacune des moyens d'accroche complémentaires (63, 64) adaptés pour permettre d'accrocher lesdites bretelles ensemble à l'extrémité libre du protecteur (2).

4. Ensemble selon la revendication 3, dans lequel ladite ceinture (51) comprend un revêtement élastomère sur sa face interne adaptée à être au contact dudit tube d'extraction (2).

5. Ensemble selon la revendication 4, dans lequel ledit revêtement élastomère est de type néoprène ou néoprène alvéolaire.

6. Ensemble selon l'une des revendications 2 à 5, dans lequel lesdits protecteurs (1) sont formés par injection de polycarbonate, de polyuréthane thermoplastique, de Polyéthylène Haute Densité, de Polypropylène ou d'Acrylonitrile Butadiène Styrène, pouvant être renforcés par des parties métalliques, métalloplastiques ou composites.

7. Ensemble selon l'une des revendications 2 à 6, comprenant en outre un capuchon (16) relié à chacun desdits protecteurs (1), le module (3) étant adapté pour être positionné sur ledit capuchon (16) du protecteur (1).

8. Ensemble selon l'une des revendications 1 à 7, dans lequel la liaison amovible entre ledit tube d'extraction (2) et le module (3) comprend un élément de fermeture (60) adapté pour former un témoin de rupture de la liaison entre le module (3) et le tube d'extraction (2).

9. Ensemble selon l'une des revendications 1 à 8, dans lequel ledit module (3) est associé à un moyen de localisation géographique.

10. Ensemble selon l'une des revendications 1 à 9 :
- le tube d'extraction (2) présentant une extrémité mâle et une extrémité femelle, l'ensemble comprenant en outre:
- un deuxième support RFID (3) comprenant un identifiant RFID correspondant à au moins une propriété dudit tube d'extraction, lesdits identifiants RFID des supports RFID étant associés entre eux dans une base de données externe, et étant également associés à des propriétés dudit tube d'extraction (2) ;
- des moyens de communication disposés à proximité d'un puits de forage, adaptés pour lire l'identifiant RFID d'un tube d'extraction (2) destiné à être utilisé dans ledit puits de forage, et à afficher séquentiellement les identifiants RFID des tubes d'extraction (2) utilisés dans ledit puits de forage ainsi qu'une sélection de propriétés desdits tubes d'extraction (2).

## Patentansprüche

1. Anordnung, umfassend:
- ein Erdöl-Extraktionsrohr (2), das an seinen Enden mit Gewinden ausgestattet ist, und
wobei die Anordnung mindestens ein Modul (3) umfasst, das ausgebildet ist, um eine Information über mindestens eine Eigenschaft eines Extraktionsrohrs (2) zu enthalten, wobei das Modul ein RFID-Träger ist, der eine RFID-Kennung umfasst, welche der Eigenschaft des Extraktionsrohrs (2) entspricht und lösbar mit dem Extraktionsrohr (2) verbunden ist, und wobei das Modul (3) an einem Geschirr (5) befestigt ist, das einen Gurt (51) umfasst, der ausgebildet ist, um um das Extraktionsrohr (2) befestigt zu sein, wobei die Anordnung **dadurch gekennzeichnet ist, dass** sie Positionierungsmittel (31, 52, 53) des Moduls (3) umfasst, die ausgebildet sind, um das Modul (3) lösbar an einem freien Ende eines Gewindeschützers (1) des Extraktionsrohrs zu positionieren.

2. Anordnung nach Anspruch 1, umfassend ferner zwei Gewindeschützer (1) des Extraktionsrohrs (2), wobei jeder der Schützer einen rohrförmigen Körper, ein zum Gewinde des Extraktionsrohrs komplementäres Gewinde und ein freies Ende umfasst.

3. Anordnung nach Anspruch 2, wobei die Positionierungsmittel zwei Bänder (52, 53) sind, die sich ab dem Gurt (51) erstrecken, wobei eines der Bänder (52) dem Modul (3) als Träger dient, wobei die Bänder (52, 53) jeweils komplementäre Befestigungsmittel (63, 64) aufweisen, die ausgebildet sind, um die Befestigung der Bänder gemeinsam am freien Ende des Schützers (2) zu erlauben.

4. Anordnung nach Anspruch 3, wobei der Gurt (51) eine Elastomerbeschichtung auf seiner Innenseite umfasst, die ausgebildet ist, um mit dem Extraktionsrohr (2) im Kontakt zu sein.

5. Anordnung nach Anspruch 4, wobei die Elastomerbeschichtung vom Typ Neopren oder Wabenneopren ist.

6. Anordnung nach einem der Ansprüche 2 bis 5, wobei die Schützer (1) durch Injektion von Polycarbonat, von thermosplastischem Polyurethan, von hochdichtem Polyethylen, von Polypropylen oder von Acrylnitril-Butadien-Styrol gebildet sind, die durch metallische, metalloplastische oder Verbundteile verstärkt sein können.

7. Anordnung nach einem der Ansprüche 2 bis 6, umfassend ferner eine Kappe (16), die mit jedem der Schützer (1) verbunden ist, wobei das Modul (3) ausgebildet ist, um auf der Kappe (16) des Schützers (1) positioniert zu sein.

8. Anordnung nach einem der Ansprüche 1 bis 7, wobei die lösbare Verbindung zwischen dem Extraktionsrohr (2) und dem Modul (3) ein Verschlusselement (60) umfasst, das ausgebildet ist, um einen Bruchnachweis der Verbindung zwischen dem Modul (3) und dem Extraktionsrohr (2) zu bilden.

9. Anordnung nach einem der Ansprüche 1 bis 8, wobei das Modul (3) einem geographischen Lokalisierungsmittel zugeordnet ist.

10. Anordnung nach einem der Ansprüche 1 bis 9:
- wobei das Extraktionsrohr (2) ein männliches und ein weibliches Ende aufweist, wobei die Anordnung ferner umfasst:
- einen zweiten RFID-Träger (3), der eine RFID-Kennung umfasst, die mindestens einer Eigenschaft des Extraktionsrohrs entspricht, wobei die RFID-Kennungen der RFID-Träger einander in einer externen Datenbank zugeordnet sind und ebenfalls Eigenschaften des Extraktionsrohrs (2) zugeordnet sind,
- Kommunikationsmittel, die in der Nähe eines Bohrschachts angeordnet sind, die ausgebildet sind, um die RFID-Kennung eines Extraktionsrohrs (2) zu lesen, das bestimmt ist, in dem Bohrschacht verwendet zu werden, und um sequentiell die RFID-Kennungen der Extraktionsrohre (2), die in dem Bohrschacht verwendet werden, sowie eine Auswahl von Eigenschaften der Extraktionsrohre (2) anzuzeigen.

## Claims

1. An assembly including:
- a petroleum extraction pipe (2) equipped with a thread at its ends, and
said assembly including at least one module (3) designed to contain information relating to at least one characteristic of an extraction pipe (2), said module being an RFID medium including an RFID identifier corresponding to said characteristic of the extraction pipe (2) and removeably fastened to said extraction pipe (2), and wherein said module (3) is fastened onto a harness (5) including a belt (51) designed to be fastened around said extraction pipe (2), said assembly being **characterized in that** it includes means (31, 52, 53) for positioning said module (3) designed to moveably position said module (3) at a free end of a thread protector (1) of said extraction pipe.

2. The assembly according to claim 1, further including two thread protectors (1) of said extraction pipe (2), each of said protectors including a tubular body, a thread complementary to said thread of the extraction pipe and a free end.

3. The assembly according to claim 2, wherein said positioning means are two straps (52, 53) extending from the belt (51), one of said straps (52) serving as a support for said module (3), said straps (52, 53) each having complementary gripping means (63, 64) designed to allow said straps to be fastened together at the free end of the protector (2).

4. The assembly according to claim 3, wherein said belt (51) includes an elastomeric coating on its inner face designed to be in contact with said extraction pipe (2).

5. The assembly according to claim 4, wherein said elastomeric coating is of the neoprene or cellular neoprene type.

6. The assembly according to one of claims 2 to 5, wherein said protectors (1) are formed by injection of polycarbonate, of thermoplastic polyurethane, of high-density polyethylene, of polypropylene or of acrylonitrile butadiene styrene, possibly reinforced by metal, metal-plastic or composite parts.

7. The assembly according to one of claims 2 to 6, further including a cap (16) connected to each of said protectors (1), the module (3) being designed to be positioned on said cap (16) of the protector (1).

8. The assembly according to one of claims 1 to 7, wherein the removable connection between said extraction pipe (2) and the module (3) includes a closure element (60) designed to serve as a telltale showing breakage of the connection between the module (3) and the extraction pipe (2).

9. The assembly according to one of claims 1 to 8, wherein said module (3) is associated with a means of geographic location.

10. The assembly according to one of claims 1 to 9:
- the extraction pipe (2) having a male end and a female end, the assembly further including:
- a second RFID medium (3) including an RFID identifier corresponding to at least one characteristic of said extraction pipe, said RFID identifiers of the RFID mediums being associated with one another in an external database, and also being associated with characteristics of said extraction pipe (2);
- communication means positioned in proximity to a wellbore, designed to read the RFID identifier of an extraction pipe (2) intended for use in said wellbore, and to display in sequence the RFID identifiers of the extraction pipes (2) used in said wellbore as well as a selection of characteristics of said extraction pipes (2).
